# EUROPEAN PATENT APPLICATION

(11) **EP 1 967 758 A2**
(43) Date of publication of application: **10.09.2008**
(21) Application number: 08152367.2
(22) Date of filing: 06.03.2008
(51) Int. Cl.: F16G 3/02, F16G 1/28

(54) **Transmission belt and relative production method**

(30) Priority: 07.03.2007 IT UD20070050
(71) Applicant: Elatech Srl., 24012 Brembilla (BG) (IT)
(72) Inventor: Scaglia, Riccardo, 20123, Milano (IT)
(74) Representative: Petraz, Gilberto Luigi

(57) **Abstract**

Method to make a transmission belt (10) provided with a strip (12) made of elastomer material, possibly reinforced with inextensible elements, and having at the ends (16, 18) respective joining elements (20) able to be coupled with each other in order to define a closed-ring configuration. The joining elements (20) comprise, made through shaping on each of the ends (16, 18), a protruding element (21, 23) which couples with a corresponding recess (22, 25) made on the opposite end (18, 16), and a closing element (27) inserted into the closed-ring configuration, through corresponding transverse holes (26) made in correspondence with both the protruding elements (21, 23).

## Description

### FIELD OF THE INVENTION

The present invention concerns a transmission belt, toothed or plane, of the so-called endless type, that is, able to be selectively configured as a ring according to specific operating sizes. The transmission belt according to the invention can be used, for example, for applications in transport and the transmission of power between mechanical members and is advantageously but not exclusively of the type reinforced internally by means of a plurality of inextensible wires or threads. The present invention also concerns the method to produce the transmission belt as above.

### BACKGROUND OF THE INVENTION

Transmission belts are known, of the so-called endless type, which comprise a base body made of elastomer material, for example polyurethane, normally reinforced by means of a plurality of inextensible wires, for example of steel or aramid, parallel to each other.

It is known to make said belts in an economically advantageous manner, starting from a shaped strip that is cut to size and joined at the ends so as to define an annular development, according to the specific operating sizes of the belt.

The ends are normally joined by means of mating punching of the edges and reciprocal heat-welding thereof, so as to obtain a closed-ring belt.

This type of known belt not only has poor resistance to traction, particularly in correspondence with the join zones, but is no longer openable once it has been welded and therefore in order to assemble and dis-assemble it onto/from relative pulleys, at least one pulley must normally be loosened or dis-assembled. This disadvantage normally causes long installation times and poor applicative versatility of the belt.

Transmission belts are also known, of the so-called openable type, that is, consisting of a strip cut to size that is selectively closed or opened by means of a hinge-type joint mounted at its ends, so as to be assembled or dis-assembled from relative pulleys.

In particular, the hinge-type joint of this type of known belt comprises a first metal pintle partly incorporated into a first end of the cut strip, a second metal pintle incorporated into a second end of the cut strip and a pin, or peg, joining the two pintles.

However, this known solution has long production times with a consequent increase in the production costs.

Furthermore, this type of known belt has different flexibility in correspondence with the joint and, in certain applications, may not have optimum functionality.

Purpose of the present invention is to make a transmission belt, toothed or plane, which can be selectively opened or closed according to determinate conditions of assembly or dis-assembly from relative pulleys, which is easy and economical to make and which has optimum functionality, substantially in any operating application.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purpose, a belt according to the present invention is used for transport applications or the mechanical transmission of power.

Advantageously, but not restrictively, the belt is of the type reinforced internally by a plurality of substantially inextensible wires.

The belt according to the present invention substantially consists of a strip, made of elastomer material, provided at the ends with respective joining means able to be coupled with each other so as to define a closed-ring configuration of the belt.

According to a characteristic feature of the present invention, the joining means comprises, for each end, at least a protruding element made by shaping on the respective end, and able to couple with a corresponding recess made on the opposite end, so as to define a substantial geometric continuity of the strip in the closed-ring configuration.

The joining means also comprises at least a closing element, or pin, able to be inserted through respective through holes made in correspondence with both the protruding elements, and able to prevent the accidental uncoupling of the protruding elements from the relative recesses.

In this way, the transmission belt can be selectively closed or opened according to determinate conditions of assembly or dis-assembly, from relative pulleys or other mechanical members, and the relative joining means is made by shaping, simply and quickly, directly on the ends of the strip, and without providing hinges or other mechanical components which are fixed or incorporated at the ends.

This solution not only has reduced costs and times compared with the state of the art, but also guarantees a uniform level of flexibility substantially along the whole perimeter of the belt, and therefore has optimum functionality, even in particular operating applications.

The transmission belt can be made according to a method according to the present invention, which comprises at least a first step in which the protruding elements and the recesses of the joining means are made, for example by punching, on each end of the strip, and a second step in which the transverse holes are made on the protruding elements so that the closing element can be inserted.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a three-dimensional view of a transmission belt according to the present invention, in a closed-ring configuration;
- fig. 2 is a three-dimensional view of the transmission belt in fig. 1, in an open configuration.

### DETAILED DESCRIPTION OF A PREFERENTIAL FORM OF EMBODIMENT

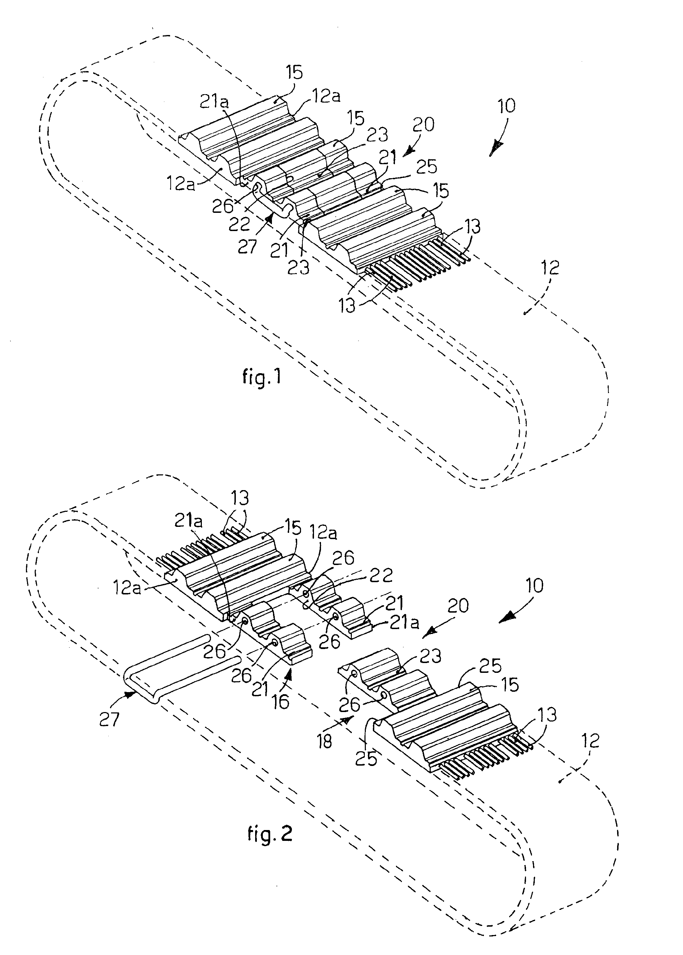

With reference to fig. 1, a belt 10 according to the present invention is of the type used for the mechanical transmission of power.

The belt 10 comprises a strip 12 made of elastomer material, for example polyurethane, reinforced longitudinally by means of a plurality of inextensible wires 13, substantially parallel to each other.

The inextensible wires 13 are made, for example, of metal and are incorporated in a substantially known manner inside the elastomer material between two different parts of the strip 12.

The strip 12 is also provided on one surface with a plurality of transverse teeth 15, with shape, size and pitch compatible with those of the corresponding seatings made in the mechanical movement members on which the belt 10 is used.

The strip 12 has at least a first end 16 and a second end 18, opposite each other, on which a coupling joint 20 is partly made, able to define at least a closed-ring configuration of the belt 10 (fig. 2).

In particular, the coupling joint 20 comprises, made on the first end 16, two first protruding elements 21 longitudinal to the strip 12, and a first recess 22 provided between the two protruding elements 21. The coupling joint also comprises, made on the second end 18, a second protruding element 23 substantially corresponding to the first recess 22 and two second recesses 25 provided laterally to the second protruding element 23 and able to accommodate the two first protruding elements 21 of the first end 16.

Both on the first protruding elements 21 and also on the second protruding element 23, two through holes 26 are made transversely, substantially parallel to each other and positioned in such a manner that, in the closed-ring configuration of the belt 10 (fig. 1), they define two transverse through conducts which pass through both the first protruding elements 21 and also the second protruding element 23.

The coupling joint 20 also comprises a closing pin 27, substantially consisting of a metal round piece bent back in a U, and able to be inserted with its two parallel segments through the two conducts defined by the through holes 26 in the closed-ring configuration so as to guarantee that the configuration is securely maintained, preventing as much as possible the accidental uncoupling of the two ends 16 and 18.

Advantageously, the coupling relationship between the pin 27 and the holes 26 is provided with a slight interference so as to limit as much as possible the accidental exit of the pin 27 during the operating steps of the belt 10.

In this case, the two first protruding elements 21 comprise a respective external edge 2 1 a, hollow with respect to the external edge 12a of the strip 12, so that, in the closed-ring configuration, the part of the pin 27 remaining outside the through holes 16 is in any case comprised within the lateral bulk of the strip 12.

The belt 10 is made according to a method according to the invention, which comprises the following steps.

A first step provides that each of the two ends 16 and 18 of the strip 12 is shaped, for example by punching, so as to define the respective first or second protruding elements 21 or 23, and also the respective recesses 22 or 25 of the coupling joint 20.

A second step provides to make the through holes 16 transversely to the first and second protruding elements 21 and 23.

According to one solution of the invention, the first and the second step can be performed simultaneously, for example with suitable machines.

It is clear that modifications and/or additions of parts and/or steps may be made to the belt 10 and method as described heretofore, without departing from the field and scope of the present invention.

For example, it comes within the field of the present invention to provide that each coupling joint 20 comprises two or more closing pins 27 inserted into corresponding through holes 26.

It also comes within the field of the present invention to provide that, for each end 16, 18 of the strip 12, the coupling joint 20 comprises only one protruding element 21, 23, and only one corresponding recess 22, 25, to ensure a minimum coupling condition.

It is also clear that, although the present invention has been described with reference to some specific examples, a person of skill in the art shall certainly be able to achieve many other equivalent forms of transmission belt and relative production method, having the characteristics as set forth in the claims and hence all coming within the field of protection defined thereby.

## Claims

1. Transmission belt comprising a strip (12) made of elastomer material, possibly reinforced with inextensible elements, and provided at the ends (16, 18) with respective joining means (20) able to be coupled with each other in order to define a closed-ring configuration, **characterized in that** said joining means (20) comprises, made through shaping on each of said ends (16, 18), at least a protruding element (21, 23) able to couple with a corresponding recess (22, 25) made on the opposite end (18, 16), and at least a closing element (27) able to be inserted into said closed-ring configuration, through corresponding transverse holes (26) made in correspondence with both said protruding elements (21, 23).

2. Transmission belt as in claim 1, **characterized in that** said joining means (20) comprises, on a first (16) of said ends, two first protruding elements (21) made longitudinal to the strip (12) and a first recess (22) provided between said two protruding elements (21), whereas on a second (18) of said ends, said joining means (20) comprises a second protruding element (23) substantially corresponding to said first recess (22), and two second recesses (25) provided laterally to said second protruding element (23) and able to accommodate said first protruding elements (21).

3. Transmission belt as in claim 2, **characterized in that** on said first protruding elements (21) and on said second protruding element (23) two transverse holes (26) are made, substantially parallel to each other and positioned in such a manner that, in said closed-ring configuration, they define two through transverse conducts which pass through both said first protruding elements (21) and also said second protruding element (23).

4. Transmission belt as in claim 3, **characterized in that** said closing element comprises a pin (27) substantially consisting of a metal round piece bent back in a U, and able to be inserted with its two parallel segments through said two transverse through holes (26).

5. Transmission belt as in claim 4, **characterized in that** said first protruding elements (21) comprise a respective external edge (21 a) hollow with respect to a corresponding external edge (12a) of said strip (12), so that, in said closed-ring configuration, said pin (27) is completely comprised within the lateral bulk of said strip (12).

6. Transmission belt as in any claim hereinbefore, **characterized in that** said closing element (27) is able to be inserted with slight interference into said transverse holes (16).

7. Method to make a transmission belt comprising a strip (12) made of elastomer material, possibly reinforced with inextensible elements, and provided at the ends (16, 18) with respective joining means (20) able to be coupled with each other in order to define a closed-ring configuration, **characterized in that** it provides a first step in which on each of said ends (16, 18) at least a protruding element (21, 23) and a corresponding recess (22, 25) are made by shaping; and a second step in which, in correspondence with said protruding elements (21, 23) corresponding transverse holes (26) are made into which at least a closing element (27) is able to be inserted.
